Europäisches Patentamt

**European Patent Office**

**Office européen des brevets**

(11) Veröffentlichungsnummer: **0 131 089**
A2

(12) **EUROPÄISCHE PATENTANMELDUNG**

(21) Anmeldenummer: **84103285.7**

(51) Int. Cl.⁴: **A 01 G 9/02**

(22) Anmeldetag: **24.03.84**

(30) Priorität: **12.07.83 DE 3325063**

(43) Veröffentlichungstag der Anmeldung:
**16.01.85 Patentblatt 85/3**

(84) Benannte Vertragsstaaten:
**AT BE CH DE FR GB IT LI LU NL SE**

(71) Anmelder: **Zarm, Hans**
**Rolandstrasse 153**
**D-4200 Oberhausen(DE)**

(72) Erfinder: **Zarm, Hans**
**Rolandstrasse 153**
**D-4200 Oberhausen(DE)**

(74) Vertreter: **Radünz, Ingo**
**Schumannstrasse 100**
**D-4000 Düsseldorf 1(DE)**

(54) **Blumenkasten.**

(57) Der an einem Geländer (2) aufzuhängende Blumenkasten (4) weist rechtwinklige Stirnflächen (5) und eine parallel zum Geländer liegende Seitenwand (6) auf. Die andere Seitenwand (7) läuft unter einem bestimmten Winkel auf die dem Geländer (2) benachbarte Seitenwand (6) zu.

Fig.1

Croydon Printing Company Ltd.

Blumenkasten

Die Erfindung betrifft einen Blumenkasten, der an einem Geländer aufhängbar ist und Seitenwände aufweist, von denen eine Seitenwand im aufgehängten Zustand des Blumenkastens im wesentlichen parallel zum Geländer verläuft.

Derartige Blumenkästen sind entweder quaderförmig oder leicht konisch ausgebildet. Aufgrund dieser Ausbildung sind die bekannten Blumenkästen im gefüllten und bepflanzten Zustand verhältnismäßig schwer.

Der Erfindung liegt die Aufgabe zugrunde, einen Blumenkasten derart zu gestalten, daß bei einer Verbesserung des optischen Gesamteindrucks die Gewichtsbelastung durch den Blumenkasten im gefüllten und aufgehängten Zustand geringer wird und die Kosten insgesamt gesenkt werden können.

Die Aufgabe wird erfindungsgemäß dadurch gelöst, daß der Blumenkasten ein rechtwinkliges Querschnittsprofil aufweist, bei dem die dem Geländer abgewandte Seitenwand unter einem Winkel auf die dem Geländer benachbarte Seitenwand zulaufend angeordnet ist. Vorteilhafte Ausgestaltungen der Erfindung sind in den Unteransprüchen angegeben.

Die rechtwinklige, vorzugsweise dem gleichschenkligen Dreieck angenäherte Querschnittsform des erfindungsgemäßen Blumenkastens ergibt eine Verminderung des Volumens und damit - gleiche Bepflanzungsfläche vorausgesetzt - ein geringeres Gewicht und eine geringere Menge der einzufüllenden Blumenerde. Gleichzeitig ist der Schwerpunkt des Blumenkastens näher an die Aufhängung herangerückt, so daß die gesamte Konstruktion unempfindlicher gegen die Belastung durch Wind ist. Die winklig verlaufende Seitenwand erhöht die Steifigkeit des Blumenkastens und vermittelt einen gefälligen Eindruck. Weitere Vorteile werden im Zusammenhang mit der Beschreibung mehrerer Ausführungsbeispiele der Erfindung erörtert.

Mehrere Ausführungsbeispiele der Erfindung sind in der Zeichnung dargestellt und werden im folgenden näher erläutert. Es zeigen

Fig. 1    aufgehängte Blumenkästen der Erfindung in perspektivischer Darstellung,

Fig. 2    einen Schnitt durch zwei aufgehängte Blumenkästen nach der Erfindung, wobei die Blumenkästen verschiedene Ausbildungen aufweisen,

Fig. 3    in perspektivischer Darstellung eine andere Ausführungsform der Erfindung   und

Fig. 4    den Schnitt IV-IV nach Fig. 3.

Von einem Balkon ist im Ausschnitt der Boden 1 und das Geländer 2 gezeigt. An dem Geländer 2 sind über Halter 3 Blumenkästen 4 aufgehängt. Jeder Blumenkasten 4 ist prismenförmig ausgebildet und weist zwei im wesentlichen rechtwinklige Stirnwände 5 und zwei Seitenwände 6, 7 auf. Die dem Geländer 2 benachbarte Seitenwand 6 verläuft aufgrund der geometrischen Ausbildung im wesentlichen parallel zu dem senkrechten Geländer 2. Die dem Geländer 2 abgewandte Seitenwand 7 läuft unter einem bestimmten Winkel, vorzugsweise im Bereich von 30° bis 60°, auf die andere Seitenwand 6 zu, so daß im Querschnitt im wesentlichen ein rechtwinkliges Dreieck gebildet wird. Auf diese Weise erhält der Blumenkasten 4 eine Querschnittsform, die im wesentlichen einem gleichschenkligen oder ungleichschenkligen rechtwinkligen Dreieck entspricht.

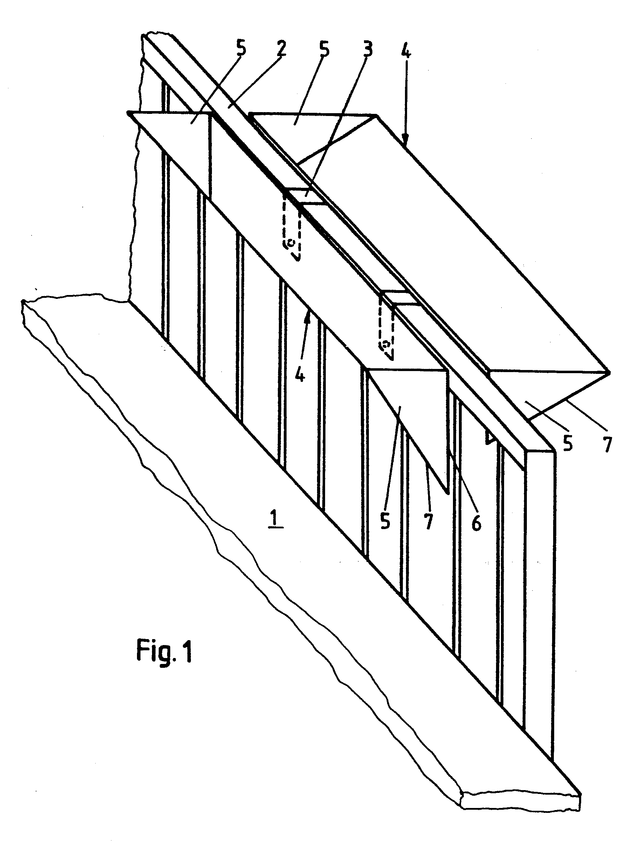

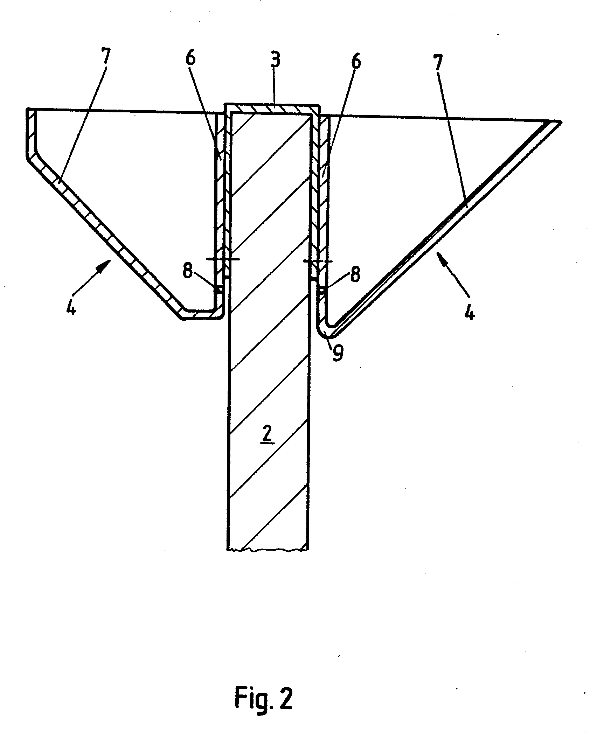

Die Querschnittsformen der Blumenkästen 4 sind, wie in Fig. 1 dargestellt, rechtwinklig-dreieckförmig ausgebildet. Bei den in Fig. 2 gezeigten Blumenkästen 4 ist die Querschnittsform dem rechtwinkliggleichschenkligen Dreieck angenähert. Der auf der rechten Seite des Geländers 2 aufgehängte Blumenkasten 4 weist Seitenwände 6, 7 auf, die unter Bildung einer abgerundeten Kante 9 zusammenstoßen. Die dem Geländer 2 abgewandte Seitenwand 7 des links am Geländer 2 aufgehängten Blumenkastens 4 verläuft beginnend von der Oberkante zunächst senkrecht, läuft dann unter einem Winkel auf die dem Geländer 2 benachbarte Seitenwand 6 zu und geht schließlich über einen waagerechten oder einen nach unten gewölbten Abschnitt in die Seitenwand 6 über.

Bei den entsprechenden räumlichen Gegebenheiten oder Anbringungsmöglichkeiten ist der Blumenkasten 4 vorteilhafterweise auch keilförmig auszubilden.

Der Blumenkasten 4 besteht aus tiefgezogenem Kunststoff wie Polyester oder Polyäthylen oder aus gegossenen Werkstoffen wie beispielsweise Eternit.

Jeder Blumenkasten 4 ist mit Haltern 3 verbunden, die das Geländer 2 übergreifen. Dabei können die Halter 3 über die Seitenwand 6 durchdringende Befestigungsmittel, beispielsweise Schrauben, mit dem Blumenkasten 4 verbunden sein. Die Halter 3 können auch an die Seitenwand 6 angeformt sein. Eine einfache und stabile Befestigung der Blumenkästen 4 ergibt sich, wenn nach Fig. 2 auf jeder Seite des Geländers 2 ein Blumenkasten 4 aufgehängt ist und beide Blumenkästen 4 mit denselben Haltern 3 verbunden sind. Dabei weisen die winklig angeordneten Seitenwände 7 der beiden paarweise aufgehängten Blumenkästen 4 voneinander weg. Diese paarweise Anordnung ergibt eine große Variationsmöglichkeit zur optimalen Ausnutzung des Platzangebotes.

Die üblichen Balkonpflanzen wurzeln nicht so tief, daß ihre Wurzeln bis in den unteren Bereich des Blumenkastens 4 reichen. Die größte Höhe des Blumenkastens 4 ist damit größer als die Wurzeltiefe der einzusetzenden Pflanzen. Die Erde, die sich im unteren Bereich des Blumenkastens 4 befindet, kann als Feuchtigkeitsspeicher dienen. Dabei sind in der Seitenwand 6 in einem bestimmten Abstand voneinander mehrere Bohrungen 8 angeordnet, die der Entwässerung dienen. Die Bohrungen 8 liegen in dem unteren, von den Wurzeln nicht erfaßten Bereich der Seitenwand 6.

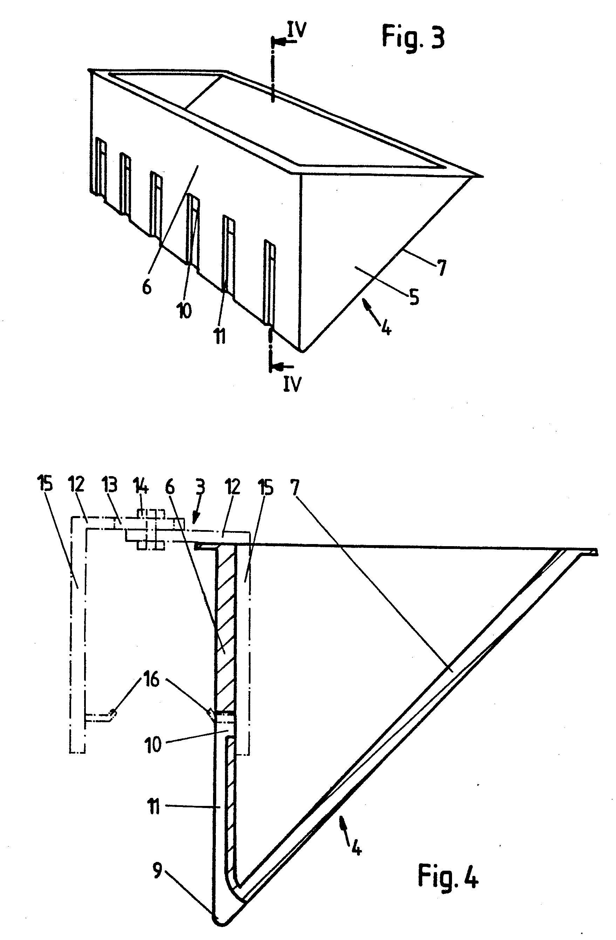

Bei der in den Fig. 3 und 4 dargestellten Ausführungsform eines Blumenkastens 4 sind die Bohrungen 8 als Durchbrüche 10 von z. B. rechteckigem Querschnitt ausgebildet. Die Durchbrüche 10 sind über die Länge der Seitenwand 6 verteilt und in einer Höhenebene vorgesehen. Vorzugsweise liegt diese Höhenebene etwa in halber Höhe der Seitenwand 6. Die Durchbrüche haben die Aufgabe, für eine Entwässerung und Belüftung der Füllung des Blumenkastens 4 zu sorgen.

In die Seitenwand 6 ist zwischen jedem Durchbruch 10 und der unteren Kante 9 des Blumenkastens 4 eine Nut 11 eingearbeitet. Die Durchbrüche 10 und die Nuten 11 sind in der dem Geländer 2 zugewandten Seitenwand 6 vorgesehen. Die Nuten 11 verlaufen senkrecht und lassen das Wasser, das aus den Durchbrüchen 10 austreten kann, nach unten ablaufen. Am unteren Auslauf ist der Grund jeder Nut 11 nach innen abgebogen. Auf diese Weise wird das in der Nut 11 ablaufende Wasser von dem Geländer 2 weg abgelenkt.

In Fig. 4 ist noch für die Anbringung des Blumenkastens 4 gestrichelt ein Halter 3 dargestellt, der aus zwei Teilen besteht. Die das Geländer 2 übergreifenden Schenkel 12 dieses Halters 3 sind gegeneinander verschiebbar, wozu der eine Schenkel 12 mit einem Langloch 13 versehen sein kann. Die beiden Schenkel 12 werden lösbar durch eine Schraube 14 verbunden.

Am unteren Ende weist der senkrechte Schenkel 15 einen Haken 16 auf. Mit dem Haken 16 greift der Halter 3 in einen der Durchbrüche 10 ein.

PATENTANSPRÜCHE :
==================================================================

1. Blumenkasten, der an einem Geländer (2) aufhängbar ist und Seitenwände (6, 7) aufweist, von denen eine im aufgehängten Zustand des Blumenkastens (4) im wesentlichen parallel zum Geländer (2) verläuft, dadurch g e k e n n z e i c h n e t , daß der Blumenkasten (4) ein rechtwinkliges Querschnittsprofil aufweist, bei dem die dem Geländer (2) abgewandte Seitenwand (7) unter einem bestimmten Winkel auf die dem Geländer (2) benachbarte Seitenwand (6) zulaufend angeordnet ist.

2. Blumenkasten nach Anspruch 1, dadurch g e k e n n z e i c h n e t , daß die zwei gegenüberliegenden Seitenwände (6, 7) unter einem Winkel von 30° bis 60° angeordnet sind.

3. Blumenkasten nach Anspruch 1 oder 2, dadurch g e k e n n z e i c h n e t , daß die zwei gegenüberliegenden Seitenwände (6, 7) in einer abgerundeten Kante (9) zusammenstoßen.

4. Blumenkasten nach einem der Ansprüche 1 bis 3, dadurch g e k e n n z e i c h n e t , daß der Blumenkasten (4) mit das Geländer (2) übergreifenden Haltern (3) verbunden ist.

5. Blumenkasten nach Anspruch 4, dadurch g e k e n n z e i c h n e t , daß die Halter (3) an einer Seitenwand (6) angeformt sind.

6. Blumenkasten nach Anspruch 4, dadurch g e k e n n z e i c h n e t , daß die Halter (3) an einer Seitenwand (6) befestigt sind.

7. Blumenkasten nach einem der Ansprüche 4 bis 6, dadurch g e k e n n z e i c h n e t , daß an den Haltern (3) zu beiden Seiten des Geländers (2) ein Blumenkasten (4) befestigt ist und daß die winklig zulaufenden Seitenwände (7) der beiden Blumenkästen (4) voneinander wegweisen.

8. Blumenkasten nach einem oder mehreren der Ansprüche 1 bis 7, dadurch g e k e n n z e i c h - net, daß die größte Höhe des Blumenkastens (4) größer ist als die Wurzeltiefe der einzusetzenden Pflanzen.

9. Blumenkasten nach Anspruch 8, dadurch g e - k e n n z e i c h n e t , daß in einer Seiten- wand (6) in dem unteren, von den Wurzeln nicht erfaßten Bereich Bohrungen (8) angebracht sind.

10. Blumenkasten nach einem oder mehreren der Ansprüche 1 bis 8, dadurch g e k e n n z e i c h - n e t , daß in einer Seitenwand (6) Durchbrüche (10) vorgesehen sind, die in einer Höhenebene über die Länge der Seitenwand (6) verteilt sind.

11. Blumenkasten nach Anspruch 10, dadurch g e - k e n n z e i c h n e t , daß die Durchbrüche (10) etwa in der halben Höhe der Seitenwand (6) vorgesehen sind.

12. Blumenkasten nach Anspruch 10 oder 11, dadurch g e k e n n z e i c h n e t , daß in eine Seiten- wand (6) jeweils zwischen einem Durchbruch (10) und der unteren Kante (9) des Blumenkastens (4) Nuten (11) eingearbeitet sind.

13. Blumenkasten nach Anspruch 12, dadurch g e - k e n n z e i c h n e t , daß am Auslauf der Nut (11) der Nutgrund nach innen abgebogen ist.

14. Blumenkasten nach einem oder mehreren der Ansprüche 10 bis 13, dadurch g e k e n n z e i c h - n e t , daß die mit den Nuten (11) und den Durchbrüchen (10) versehene Seitenwand (6) dem Geländer (2) zugewandt ist.

15. Blumenkasten nach einem oder mehreren der Ansprüche 1 bis 14, dadurch g e k e n n - z e i c h n e t , daß in einige Durchbrüche (10) der Seitenwand (6) von innen Haken (16) eingreifen, die an den unteren Enden der Halter (3) angebracht sind.

16. Blumenkasten nach Anspruch 15, dadurch g e - k e n n z e i c h n e t , daß die das Geländer (2) übergreifenden Schenkel (12) des Halters (3) gegeneinander verstellbar und lösbar miteinander verbindbar sind.

Fig. 1

Fig. 2

0131089

Fig. 3

IV

IV

6

10

11

7

5

4

15 12 13 14 6 3 12 15 7

16

10

11

9

4

Fig. 4